Europäisches Patentamt

(19) **European Patent Office**

Office européen des brevets

(11) Publication number: **0 136 753**
**B1**

(12) **EUROPEAN PATENT SPECIFICATION**

(45) Date of publication of patent specification: **17.02.88**

(51) Int. Cl.⁴: **G 11 B 23/023**

(21) Application number: **84201266.8**

(22) Date of filing: **04.09.84**

(54) Combination of a magnetic-tape cassette and a storage case for the cassette.

(30) Priority: **05.09.83 NL 8303077**

(43) Date of publication of application:
**10.04.85 Bulletin 85/15**

(45) Publication of the grant of the patent:
**17.02.88 Bulletin 88/07**

(84) Designated Contracting States:
**CH DE FR GB IT LI NL**

(56) References cited:
**AU-A- 529 217**
**FR-A-2 478 361**
**FR-A-2 503 667**
**FR-A-2 512 252**
**FR-A-2 514 187**
**US-A-4 291 801**
**US-A-4 365 712**

(73) Proprietor: **N.V. Philips' Gloeilampenfabrieken**
**Groenewoudseweg 1**
**NL-5621 BA Eindhoven (NL)**

(72) Inventor: **Sieben, Joannes Henricus F. C.**
**c/o INT. OCTROOIBUREAU B.V. Prof. Holstlaan 6**
**NL-5656 AA Eindhoven (NL)**

(74) Representative: **Smit, Frederik Jan et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a combination of a magnetic-tape cassette and a storage case for the cassette, which cassette comprises a housing having two parallel, substantially rectangular, major walls, two side walls and a rear wall, a front with a front opening or recess which extends into at least one major wall, and a partition which separates the front opening or recess from the interior of the housing, in which housing two juxtaposed reel hubs are mounted for rotation about two axes which extend perpendicularly to the major walls, a magnetic tape being wound on said reel hubs and having a portion which extends across the front opening or recess and which when the cassette is not in use, is covered, at least at the front side, by a front cover which in a closed position covers the front opening or recess at the front side thereof and which is pivotally connected to the housing, and the storage case comprising:

a) a base section having a rectangular bottom with a front edge and a rear edge, an upright rear wall which adjoins the rear edge of the bottom, and a pair of spaced parallel upright side walls which extend from the rear wall towards the front edge of the bottom,

b) at least one upright positioning element on the bottom of the base section for positioning the magnetic-tape cassette when the cassette is situated in the case with its front cover facing the rear wall of the base section,

c) a cover section comprising a rectangular upper wall with a front edge and a rear edge, a wall portion which extends along this rear edge and which in a closed position of the cover section is at least substantially contiguous with the rear wall of the base section, a front wall which adjoins the front edge or the upper wall and in the closed position of the cover section bears on the bottom of the base section adjacent the front edge thereof, and a pair of parallel spaced side walls which extend from the front wall of the cover section towards the rear edge of the upper wall thereof, the side walls of the cover section being pivotally connected to the side walls of the base section to enable the cover section to be pivoted relative to the base section between the closed position and an open position.

A storage case of this type is described in GB—A—2105306. This known storage case is intended for storing a video cassette and for this purpose it is provided with a cylindrical positioning element which after insertion of the cassette into the case engages with one of the reel hubs of the cassette. This ensures that after insertion into the known case the casssette always occupies one specific position in the case, the cassette in the case facing the cover section with the upper major wall and the front cover facing the rear wall of the base section of the case. This function of the positioning element of the case is referred to as "mis-insertion protection" (protection against erroneous insertion of the cassette). The location of the positioning element substantially halfway between the front and rear edges of the base section of the case, which is necessary for its cooperation with a reel hub of the cassette, makes it substantially impossible to enclose an insert sheet of the desired size on the bottom of the base section in the known case. Such an insert sheet may be required in order to enable notes about the recordings on the magnetic tape to be kept with the magnetic-tape cassette. Moreover, with the known storage case it may happen that the front cover of the cassette butts against the rear wall of the base section of the case, for example when the case is dropped, so that the pivots between the front cover and the cassette housing are subjected to an impermissible load and may break off.

It is the object of the invention to provide more room for the accommodation of an insert sheet in the base section of a storage case for a magnetic-tape cassette of the type specific and in addition to provide an effective protection of the front cover of the cassette against shocks to which the case is subjected.

To this end the invention is characterized in that the positioning element is so situated on the bottom of the base section relative to the rear wall of this section that when the cassette is in the storage case the positioning element extends into the front opening or recess of the cassette housing, and the distance, measured on the bottom of the base section between that side of the positioning element which is remote from the rear wall of the base section and the inner side of this wall is greater than the distance between that portion of the partition in the cassette housing which faces the positioning element and the front side of the front cover of the cassette, so that a movement of the cassette inside the case towards the rear wall of the base section of the case will be limited by abutment of the partition with the positioning element, thereby ensuring that the front cover of the cassette remains clear of the rear wall of base section of the case.

In this way it is possible to arrange the positioning element near the rear wall of the base section of the case, so that a fairly large area of the bottom of the base section is available for an insert sheet. In the case of magnetic-tape cassettes, in particular video casssettes this is important in view of the increasing need for space to keep notes. This is especially so for comparatively small casssettes, such as the recently developed, internationally standardized 8-mm video cassettes, which have comparatively small dimensions. Moreover, the positioning element in the storage case in accordance with the invention also provides an effective mis-insertion protection. The relationship between the aforesaid distances in the case/cassette combination ensures that, for example, impact loads to which the case is subjected are taken by the partition in the cassette housing and not by the front cover of the cassette. This is advantageous for storage cases which must be handled frequently, for example, cases containing casssettes for portable recording and/or reproducing equipment, such as, for example, equipment using the aforementioned 8-mm video cassettes. This protection against impact loads is of particular importance for small cassettes such as the aforementioned 8-mm video cassettes, in which the pivots of the front cover are comparatively vulnerable.

A preferred embodiment of the contamination in accordance with the invention is characterized in that on the bottom of the base section of the storage case, near the front edge thereof, is a ridge which extends parallel to said front edge, and the distance, measured on the bottom of the base section, between that side of the ridge which faces the rear wall of the base section and that part of the positioning element which is nearest this wall is smaller than the distance between that side of the front cover of the cassette which, when the cassette is in the storage case, is remote from the rear wall of the base section and the outer side of the rear wall of the cassette housing, so that a movement of the cassette in the storage case towards the front wall of the cover section of the case will be limited by abutment of the rear wall of the cassette housing with the ridge, so that the front cover of the cassette remains clear of the positioning element. Thus, the rear wall of the cassette housing absorbs the shock when the storage case is subjected to an impact load, and the positioning element on the base section of the case cannot exert an impermissible load on the front cover of the cassette.

An effective embodiment of the combination in accordance with the invention is characterized in that the positioning element comprises a lug which extends parallel to the rear wall of the base section of the storage case. As a result of this arrangement a comparatively large area is available for an insert sheet on the bottom of the base section towards the front edge of this section. The arrangement of the lug also ensures a correct engagement of the lug with the partition which bounds the front opening or recess in the cassette housing.

In this respect a further preferred embodiment of combination in accordance with the invention is characterized in that the positioning element further comprise at least one rub with an upper edge which slopes downwardly from the upper edge of the lug towards the rear wall of the base section of the storage case. When the cassette is removed from the storage case the front cover of the cassette can readily slide on the upper edge of the rib, so that no impermissible forces can be exerted on the front cover.

In connection with the foregoing another embodiment of the combination in accordance with the invention is characterized in that there are two of said positioning elements on the bottom of the base section of the storage case, the lugs of the elements being spaced from and disposed in line with each other, and the rub of each element adjoining the respective lug at right angles thereto substantially halfway the ends of the lug measured parallel to the rear wall of said base section. The two positioning elements thus each have the shape of a T, and they can be injection-moulded intergrally with the base section with satisfactory rigidity. Moreover, the two positioning elements provide an effective protection of the front cover of the cassette against shocks, without reducing the space which is available for an insert sheet on the bottom of the base section.

A further preferred embodiment of the combination according to the invention, in which the front cover of the cassette comprises separate outer and inner covers which are coupled to each other and which are located at the front and rear sides respectively of the position of the magnetic tape extends, across the front opening or recess at the cassette housing is characterized in that the upper edge of the rib of the or each positioning element extends substantially parallel to the adjacent part of the inner front cover of the cassette when the cassette is in the storage case. Thus, when the cassette is removed from the storage case the inner cover can slide up the rub of the or each positioning element in such a manner that the inner cover and, due to the coupling between the two covers, the outer cover remain in the closed position, so that the magnetic tape cannot come into contact with the positioning element or elements or other parts of the storage case.

An easy insertion of the magnetic tape casssette into the storage case while maintaining the advantages of the ridge near the front edge of the base section is possible in yet another embodiment of the combination in accordance with the invention if that side of the ridge on the bottom of the base section of the storage case which is nearer the front edge of said bottom slopes upwards in the rearward direction, and that side of the ridge which faces the rear wall of said base section is perpendicular to the bottom of the base section.

A suitable alignment of the cassette during its insertion into the storage case and subsequently a correct lateral support for the cassette near the front corners of the case are obtained if a tapered projection is formed on the bottom of the base section of the storage case at each end of the ridge, which projections are disposed in line with the side walls of the base section and project above the ridge. Owing to their tapered shape the projections do not constitute obstructions to the fingers when the cassette is inserted into the case.

The lateral support of the cassette in the case is further improved if in each of the side wall of the base section of the storage case a resilient finger is arranged which fingers act against the side walls of the cassette housing when the cassette is in the storage case.

The insertion of the cassette into the storage case and a correct positioning of the front opening or recess of the cassette housing relative to the positioning element are further simplified if the upper edge portions of the inner surfaces of the side walls of the base section are bevelled.

Two embodiments of the invention will now be described in more detail, by way of non-limitative example, with reference to the drawings.

Fig. 1 is a perspective view of a combination of a magnetic-tape cassette and a storage case in accordance with the invention, the cassette being shown outside the case.

Fig. 2 is a cross-sectional view on an enlarged scale of the storage case shown in Fig. 1, with the cassette inside the case.

Fig. 3 is a sectional view taken on the line III—III in Fig. 2, only one half of the case/cassette combination being shown.

Fig. 4 is a perspective view of a second embodiment of the case/cassette combination in accordance with the invention, the cassette again being shown outside the case.

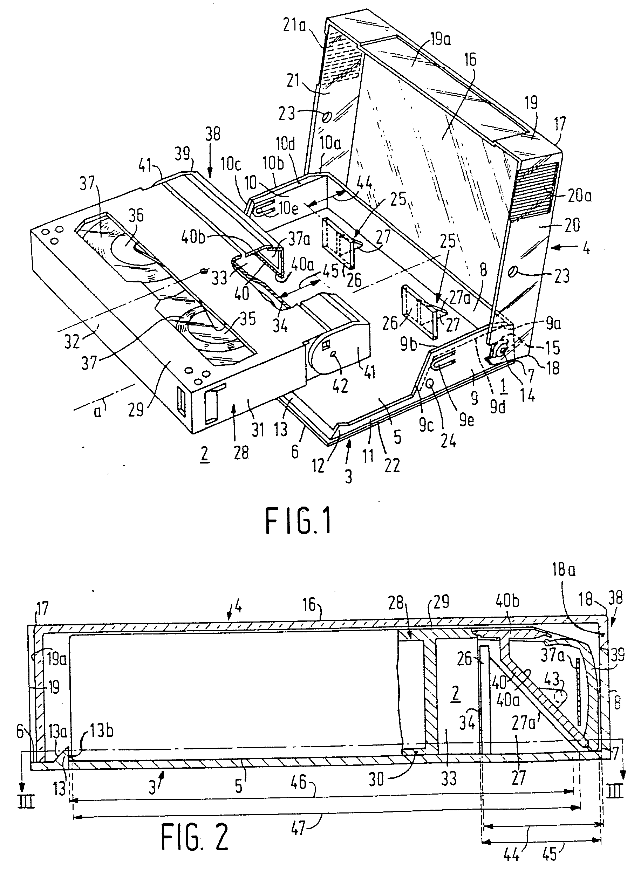

Figs. 1 to 3 show a storage case 1 for a magnetic-tape cassette 2, preferably a video cassette. The storage case comprises a base section 3 and a cover section 4 which is pivotally connected to the base section. The base section 3 comprises a rectangular bottom with a front edge 6 and a rear edge 7, and an upright rear wall 8 which adjoins the rear edge 7. The base section 3 further comprises a pair of spaced parallel side walls 9 and 10 whose upper edges near the rear wall 8 comprise portions 9a and 10a, respectively, which are slightly downwardly inclined towards the rear wall. Consequently, the main upper edge portions 9b and 10b of the side walls 9 and 10 respectively, are situated slightly higher with respect to the bottom 5 than the upper edge of the rear wall 8. Substantially halfway between the front edge 6 and the rear edge 7 of the bottom 5 the edge portions 9b and 10b of the side walls 9 and 10 ajoin downwardly inclined edge portions 9c and 10c respectively. On the inner sides the upper edges of the side walls 9 and 10 comprise bevelled surfaces 9d and 10d respectively, which facilitate insertion of the cassette 2 into the case 1. The downwardly inclined edge portions 9c and 10c of the side walls 9 and 10 respectively adjoin ridges 11 which are disposed one in line with each side wall and of which the right-hand ridge is visible in Fig. 1. The two halves of the storage case 1 are mirror-symmetrical with respect to a median plane *a* perpendicular to the bottom 5, so that another ridge 11 is present on the left-hand side of the base section 3. Both ridges 11 have a substantially smaller height above the bottom 5 than the side walls 9 and 10, so that the cassette 2 can readily be inserted into the base section 3. At its end which is remote from the adjoining side wall 9 or 10 each ridge 11 terminates in a tapered upward projection 12 adjacent a front corner of the bottom 5, each projection being disposed in line with the relevant side wall 9 or 10. Between the two projections 12 a ridge 13 extends across the bottom 5 parallel to the front edge 6 thereof and slightly spaced from this edge. The front side 13a of this ridge slopes upwardly in the rearward direction to a height above the bottom 5 which is preferably substantially half the height of the projections 12 and at which height the front side 13a adjoins the rear side 13b of the ridge, which rear side is substantially perpendicular to the bottom 5 (see Fig. 2).

Resilient fingers 9e and 10e are formed in the side walls 9 and 10 respectively, the fingers being integral with the side walls. The fingers extend substantially parallel to the bottom 5 and are connected to the side walls at their ends which are disposed nearer the rear wall 8. The fingers 9e and 10e are inherently resilient when the base section 3 is made of a suitable plastics, and on their inner sides, adjacent their free ends, the fingers have protrusions which will press against the cassette 2 when it is in the case 1.

On their outer sides the side walls 9 and 10 carry studs 14 which constitute pivots for the pivotal movement of the cover section 4 relative to the base section 3. At their bases the studs 14 are provided with coaxial raised portions 15 for a smooth pivotal movement of the cover section 4, which raised portions 15 are integral with the studs and the side walls.

The cover section 4 comprises a rectangular upper wall 16 with a front edge 17 and a rear edge 18. Extending along the rear edge 18 is a comparatively narrow wall portion 18a which, when the cover section 4 is in the closed position as shown in Fig. 2, is contiguous and co-planar with the rear wall 8 of the base section 3. The cover section 4 also comprises a front wall 19 which in the closed position of the cover section bears on the bottom 5 of the base section 3 in front of the ridge 13, at least near the front corners of the bottom 5. In order to faciliate opening of the cover section 4 a portion 19a of the front wall 19 is recessed slightly in the inward direction. The recessed portion 19a facilitates holding the centre portion of the front edge 6 of the bottom 5 of the base section with, for example a thumb. A similar provision is made in the two side walls 20 and 21 of the cover section 4, which walls have recessed portions 20a and 21a respectively to enable the side edges 22 of the base section 3 to be gripped. When the cover section 4 is to be opened the user thus has the choice of gripping either the side edges 22 or the first and rear edges 6 and 7 of the bottom 5 of the base section 3. The latter alternative is of advantage when for example, the case is to be opened by a child.

The side walls 20 and 21 of the cover section 4 are spaced from and extend parallel to one another and they adjoin the upper wall 19 to the rear edge 18 of the upper wall of the cover section, and approximately midway between their ends the side walls are each formed with a hole 23. In the closed position of the cover section, protrusions 24 formed on the outer sides of the side walls 9 and 10 of the base section 3 engage in the holes 23 to lock the cover section 4 in this position.

Preferably, the entire cover section 4 is made of a transparent plastics material, the recessed portions 20a and 21a of the side walls 20 and 21 respectively being ribbed for a better grip on the cover section. In the present example the base section 3 is made of an opaque plastics material, but if desired this part of the storage case may also be transparent.

On the bottom 5 of the base section 3 are two casssette-positioning elements 25. These elements each comprise an upstanding lug 26 which extends parallel to the rear wall 8 of the base section 3, and a rub 27 which adjoins and extends perpendicularly to the lug 26. The arrangement of the positioning elements 25 on the bottom 5 will be described in more detail hereinafter. Each rub 27 has an upper edge 27a which slopes downwardly in the measured direction from the upper edge of the adjoining lug 26 to the bottom 5 of the base section 3. Thus, the positioning elements 25 are each T-shaped in plan view. Preferably, the positioning elements 25 are formed integrally with the bottom 5 of the base section 3.

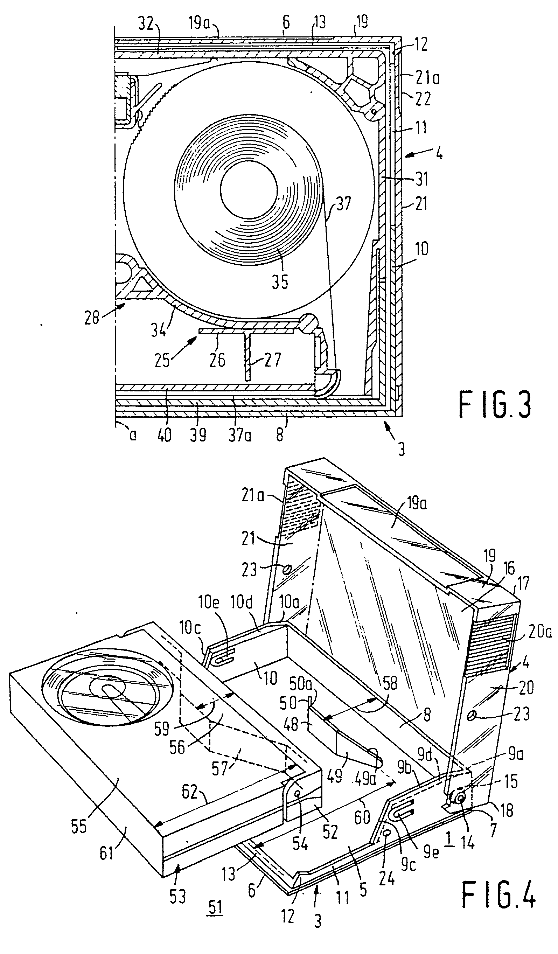

The magnetic-tape cassette 2 to be stored in the storage case 1 comprises a housing 28 having two parallel substantially rectangular, major walls, one wall 29 constituting the upper wall of the housing and the other wall 30 constituting the bottom wall. The cassette housing 28 further comprises two side walls 31 and a rear wall 32 and a front with a front opening or recess 33 which extends into the major walls 29 and 30 and which is separated from the interior of the housing 28 by a partition 34. Inside the housing 28, between the major walls 29 and 30, two juxtaposed reel hubs 35 and 36 are mounted for rotation about two axes which extend perpendicularly to the major walls. A magnetic tape 37 is wound on the reel hubs, a portion 37a of the tape extending across the front opening or recess 33 of the cassette housing as shown in Fig. 3. To shield the front opening or recess 33 and the portion 37a of the magnetic tape, a front-cover system 38 is arranged at the front of the cassette housing 28, which system comprises an outer cover 39 and an inner cover 40. The outer cover 39 comprises two side portions 41 which are pivotally connected to the housing 28 by means of pivots 42. The outer cover 39 effectively shields the portion 37a of the magnetic tape at the front side thereof. In a manner not shown the inner cover 40 is coupled to the outer cover 39 and is guided in guideways in the partition 34, the inner cover 40 being connected to the outer cover 39 by means of pivots 43. The coupling between the inner and outer covers results in the inner cover 40 being swung up with the outer cover 39 when the latter is swung open, thereby exposing the magnetic-tape portion 37a. It will be evident that the front cover system 38 must be prevented from swinging open when the magnetic-tape cassette 2 is inserted into the case 1. This is achieved by means of a latching mechanism, not shown, which is situated near one of the side portions 41 of the outer cover 39. The inner cover 40 comprises a portion 40a which serves for shielding the magnetic-tape portion 37a at the rear side thereof. In the closed position of the front covers 39 and 40 the portion 40a of the inner cover slopes upwardly in the rearward direction from the plane of the bottom wall 30 of the cassette housing to join an upper portion 40b of the inner cover which is substantially co-planar with the upper wall 29 of the cassette housing in the closed position of the front covers. The upper portion 40b closes the front opening or recess 33 at the top. The front opening or recess 33 is completely open at the underside of the cassette housing.

As stated previously, insertion of the magnetic-tape cassette 2 into the storage case 1 is facilitated by the bevelled surfaces 9d and 10d on the inner side of the side walls 9 and 10 of the base section 3 of the case. The cassette is placed on the bottom 5 of the base section 3 so that the two cassette-positioning elements 25 on the bottom 5 enter the front opening or recess 33 of the cassette housing 28 and the rear wall 32 of the cassette housing engages behind the upright side 13b of the ridge 13 on the bottom 5. The resilient fingers 9e and 10e in the side walls of the base section press against the respective side walls 31 of the cassette housing, so that the cassette is supported effectively in the lateral direction. The projections 12 on the base section ensure a correct alignment of the cassette near the front corners of the case 1. Thus, in the position shown in Figs. 1 and 2 the cassette 2 contacts only portions of the base section 3 becasue the front wall 19 and side walls 20 and 21 of the cover section are situated at the outersides of the side walls 9 and 10 and ridge 13 of the base section. The presence of the cassette-positioning elements 25 is very important in this respect. The main function of these elements during insertion is to preclude insertion of the casssette into the storage case the wrong way up. This function is also referred to as "mis-insertion protection". If the cassette is inadvertently inserted with the major wall 29 facing downwards, the positioning elements will butt against the portion 40b of the inner front cover 40 of the cassette, so that further insertion is impossible. This ensures that the cassette can only be inserted into the case with the upper side facing upwards. It is also important to protect the cassette in the case against shocks to which the case is subjected, for example by being accidentally dropped. Such shocks, if they were transmitted to the comparatively vulnerable front-cover system of the cassette, might result in damage to this system. In particular the pivots 42 and 43 might break off. Breakage of other parts of the inner and the outer front covers also is not unlikely. To preclude this the positioning elements 25 are so arranged that the distance, measured on the bottom 5 of the base section 3 of the storage case, between those sides of the lugs 26 of the elements 25 which are remote from the rear wall 8 of the base section 3 and the inner side of the rear wall 8, which distance is indicated by the double-headed arrow 44 in Figs. 1 and 2, is greater than the distance indicated by the double-headed arrow 45, between that portion of the partition 34 in the casssette housing which faces the lugs 26 and the front side of the outer front cover 39 of the cassette. Because of this, a movement of the cassette in the storage case towards the rear wall 8 will always be limited by abutment of the partition 34 with the lugs 26, thereby ensuring that the outer front cover 39 of the casssette remains clear of the rear wall 8. Thus, if the case 1 is subjected to a shock acting in the direction of the rear wall 8 this will not result in the outer front cover 39 and thereby the pivots 42 and 43, being subjected to an impermissible load.

In this respect it is also important that the distance, measured on the bottom 5 of the base section 3 of the storage case, between that side 13b of the ridge 13 on the base section 3 which faces the rear wall 8 of this section and that end of the rub 27 of each positioning element which is nearer the rear wall 8, which distance is indicated by the double-headed arrow 46 in Fig. 2, is smaller than the distance, measured in the plane of the bottom wall 30 of the cassette housing and indicated by the double-headed arrow 47 in Fig. 2, between that side of the inner front cover 40 of the cassette which, when the cassette is in the storage case, is remote from the rear wall 8 of the base section of the case and the outer side of the rear wall 32 of the cassette housing. Because of this, a movement of the cassette within the case towards the front wall 19 of the cover section 4 of the case will be limited by abutment of the rear wall 32 of the casssette housing with the upright side 13b of the ridge 13, thereby ensuring that the inner cover 40 of the front-cover system 38 of the cassette remains clear of the positioning elements 25.

The dimensional relationships described above thus effectively protect the front-cover system 38 of a cassette contained in the storage case against shocks to which the case is subjected. The arrangement of the positioning elements 25 near the rear wall 8 of the base section 3 of the case has the further advantage that between the lugs 26 of the positioning elements and the ridge 13 on the base section 3 a comparatively large area of the bottom 5 is available for an insert sheet. Such a sheet may be employed for recording data about the contents of the cassette. Alternatively, by means of such a sheet the manufacturer of the cassette may inform the user of the specification of the relevant cassette. Particularly in the case of a comparatively small cassette, such as the aforementioned 8-mm video casssette, the space available for an insert sheet is comparatively small. Therefore, the above arrangement of the positioning elements 25 has the advantage that a substantial portion of the bottom surface is available for this purpose.

When the cassette 2 is removed from the case 1 the sloping upper edges 27a of the rubs 27 of the positioning elements 25 ensure that the inner front cover 40 of the cassette can slide smoothly over the positioning elements 25. Preferably, the upper edges 27a extend substantially parallel to the inner side of the inner front cover 40 of the cassette when the cassette is in the case 1 so that the forces obtaining are exerted in directions such that the coupled inner and outer front covers 40 and 39 remain closed. This also ensures that when the cassette is removed the front-cover system 38 and the portion 37a of the magnetic tape are not damaged.

It is to be noted that modifications to the positioning elements shown in Figs. 1 to 3 are possible whilst maintaining their advantages. For example, the lugs 26 may adjoin each other so that in fact one integrated positioning element is obtained. Instead of the two ribs 27 shown a larger number of ribs may be provided in a manner not shown. Also, resilient fingers similar to the fingers 9e and 10e in the side walls of the base section may be formed in the lugs 26 in a manner not shown to act against the partition 34 in the cassette housing and urge the rear wall 32 of the housing against the upright side 13b of the ridge 13, on the base section 3. Together with the fingers 9e and 10e these further fingers ensure that a magnetic-tape cassette situated within the base section 3 cannot inadvertently drop out of the storage case, for example when the base section is turned upside down.

A second embodiment of a case/cassette combination in accordance with the invention, shown in Fig. 4, comprises a base section and a cover section of similar construction to the base and cover sections in the first embodiment. Corresponding parts therefore bear the same reference numerals. The second embodiment differs from the first in that a single positioning element is provided on the bottom 5 of the base section. This positioning element comprises a lug 48 which extends parallel to the rear wall 8 of the base section and which at its ends adjoins ribs 49 and 50, whose upper edges 49a and 50a slope downwardly from the upper edge of the lug 48. The ridges 49 and 50 extend obliquely towards the rear wall 8 and towards the side walls 9 and 10, respectively of the base section 3. The magnetic-tape cassette 51 associated with this storage case 1 differs from the magnetic-tape cassette 2 in respect of a number of constructional elements, the main difference being the single front cover 52. This cover is also pivotally connected to the cassette housing 53 by pivots 54. At the top the cassette housing 53 is closed by an upper major wall 55, which in contradistinction to the upper major wall 29 in the first embodiment extends over the front opening 56 or recess in the cassette housing. This front opening or recess, designated 56, only extends into the lower major wall of the cassette housing 53. Again the front opening or recess 56 is bounded by a partition 57 in the cassette housing 53.

By applying to this embodiment similar dimensional relationship to those described above for the first embodiment, it is possible to prevent the front cover 52 of the cassette 53 from being subjected to an impermissible load by abutment with the rear wall 8 of the base section of the storage case 1 when the case 1 is subjected to shocks. In the present embodiment the distance between that side of the lug 48 of the positioning element which is remote from the rear wall 8 and the inner side of the rear wall 8, which distance is indicated by the double-headed arrow 58, must be greater than the distance between that portion of the partition 57 in the cassette housing which faces the lug 48 and the outer side of the front cover 52 of the cassette, which distance is indicated by the double-headed arrow 59. In the present embodiment this again ensures that the front cover of the cassette cannot contact the rear wall 8 of the base section of the storage case in the event of shocks on the case. This is because the partition 57 will abut the positioning element. Similarly, the distance between that side of the ridge 13 on the base section of the storage case which faces the rear wall of this section and that end of each rub 49 which is nearer the rear wall 8, which distance is indicated by the double-headed arrow 60, is preferably smaller than the distance, measured in the plane of the bottom wall of the cassette housing and indicated by the double-headed arrow 62, between that side of the front cover 52 of the cassette which, when the cassette is in the storage case, is remote from the rear wall 8 of the base section of the case and the outer side of the rear wall 61 of the cassette housing 53. This ensures that in this embodiment also the positioning element cannot abut the front cover of the cassette when the storage case is subjected to shocks.

The embodiment described with reference to Fig. 4 is suitable not only for small cassettes, but also for larger cassettes. The video cassette 51 shown in Fig. 4 is of the "Betamax" type and is slightly larger than the cassette 2 in the first embodiment. The storage case in the embodiment shown in Fig. 4 also has the advantage that a large part of the bottom 5 of the base section of the case is available for an insert sheet, whilst moreover it affords a satisfactory protection of the front cover 52 of the cassette.

**Claims**

1. A combination of a magnetic-tape cassette (2) and a storage case (1) for the cassette, which cassette comprises a housing (28) having two parallel, substantially rectangular, major walls, (29, 30), two side walls (31) and a rear wall (32), a front with a front opening or recess (33) which extends into at least one major wall, (29, 30) and a partition (34) which separates the front opening or recess (33) from the interior of the housing (28), in which housing (28) two juxtaposed reel hubs (35, 36) are mounted for rotation about two axes which extend perpendicularly to the major walls, (29, 30) a magnetic tape (37) being wound on said reel hubs (35, 36) and having a portion (37a) which extends across the front opening or recess (33) and which, when the cassette (2) is not in use, is covered at least at the front side by a front cover (38) which in a closed position covers the front opening or recess (33) at the front side thereof and which is pivotally connected to the housing (28), and the storage case (1) comprising:

a) a base section (3) having a rectangular bottom (5) with a front edge (6) and a rear edge (7), an upright rear wall (8) which adjoins the rear edge (7) of the bottom and a pair of spaced parallel upright side walls (9, 10) which extend from the rear wall (8) towards the front edge (6) of the bottom (5),

b) at least one upright positioning element (25) on the bottom (5) of the base section (3) for positioning the magnetic-tape cassette (2) when the cassette is situated in the case (1) with its front cover (38) facing the rear wall (8) of the base section (3),

c) a cover section (4) comprising a rectangular upper wall (16) with a front edge (17) and a rear edge, (18) a wall portion (18a) which extends along this rear edge (18) and which in a closed position of the cover section (4) is at least substantially contiguous with the rear wall (8) of the base section (3), a front wall (19) which adjoins the front edge (17) of the upper wall (16) and, in the closed position of the cover section (4) bears on the bottom (5) of the base section (3) adjacent the front edge (6) thereof, and a pair of parallel spaced side walls (20, 21) which extend from the front wall (19) of the cover section (4) towards the rear edge (18) of the upper wall (16) thereof, the side walls (20, 21) of the cover section (4) being pivotally connected to the side walls (9, 10) of the base section (3) to enable the cover section (4) to be pivoted relative to the base section (3) between the closed position and an open position, characterized in that the positioning element (25) is so situated on the bottom (5) of the base section (3) relative to the rear wall (8) of this section (3) that when the cassette (2) is in the storage case (1) the positioning element (25) extends into the front opening or recess (33) of the cassette housing (28), and the distance (44), measured on the bottom (5) of the base section (3), between that side of the positioning element (25) which is remote from the rear wall (8) of the base section (3) and the inner side of this wall is greater than the distance (45) between that portion of the partition (44) in the cassette housing (28) which faces the positioning element (25) and the front side of the front cover (38) of the cassette (2), so that a movement of the cassette (2) inside the case (1) towards the rear wall (8) of the base section (3) of the case (1) will be limited by abutment of the partition (34) with the positioning element (25), thereby ensuring that the front cover (38) of the cassette (2) remains clear of the rear wall (8) of the base section (3) of the case (1).

2. A combination as claimed in Claim 1, characterized in that on the bottom (5) of the base section (3) of the storage case (1), near the front edge (6) thereof, is a ridge (13) which extends parallel to said front edge (6) and the distance (46), measured on the bottom (5) of the base section (3), between that side (13b) of the ridge (13) which faces the rear wall (8) of the base section (3) and that part (27) of the positioning element (25) which is nearest this wall (8) is smaller than the distance (47) between that side (40) of the front cover (38) of the cassette (2) which, when the cassette (2) is in the storage case (1), is remote from the rear wall (8) of the base section (3) and the outer side of the rear wall (32) of the cassette housing (28), so that a movement of the cassette (2) in the storage case (1) towards the front wall (19) of the cover section (4) of the case (1) will be limited by abutment of the rear wall (32) of the cassette housing (28) with the ridge (13), so that the front cover (38) of the cassette (2) remains clear of the positioning element (25).

3. A combination as claimed in Claim 1 or 2, characterized in that the positioning element comprises a lug (26) which extends parallel to the rear wall (8) of the base section (3) of the storage case (1).

4. A combination as claimed in Claim 3, characterized in that the positioning element (25) further comprises at least one rib (27) with an upper edge (27a) which slopes downwardly from the upper edge of the lug (26) towards the rear wall (8) of the base section (3) of the storage case (1).

5. A combination as claimed in Claim 4, characterized in that there are two of said positioning elements (25) on the bottom (5) of the base section (3) of the storage case (1), the lugs (26) of the elements (25) being spaced from and disposed in line with each other and the rib (27) of each element (25) adjoining the respective lug (26) at right angles thereto substantially halfway between the ends of the lug (26) measured parallel to the rear wall (8) of said base sections (3).

6. A combination as claimed in Claim 4 or 5; in which the front cover (38) of the cassette (2) comprises separate outer (39) and inner (40) covers which are coupled to each other and which are located at the front and rear sides respectively of the portion (37a) of the magnetic-tape (37) which extends across the front opening or recess (33) of the cassette housing (38), characterized in that the upper edge (27a) of the rib (27) of the or each positioning element (25) extends substantially parallel to the adjacent part of the inner front cover (40) of the cassette (2) when the cassette is in the storage case (1).

7. A combination as claimed in Claim 2 or any of Claims 3 to 6, when read as appendant to Claim 2, characterized in that that side (13a) of the ridge (13) on the bottom (5) of the base section (3) of the storage case (1) which is nearer the front edge (6) of said bottom (5) slopes upwards in the rearward direction and that side (13b) of the ridge (13) which faces the rear wall (8) of said base section (3) is perpendicular to the bottom (5) of the base section (3).

8. A combination as claimed in Claim 7, characterized in that a tapered projection (12) is formed on the bottom (5) of the base section (3) of the storage case (1) at each end of the ridge (13), which projections (12) are disposed in line with the side wall (11) of the base section (3) and project above the ridge (13).

9. A combination as claimed in any of the preceding Claims, characterized in that in each of the side walls (9, 10) of the base section (3) of the storage case (1) a resilient finger (9e, 10e) is arranged, which fingers (9e, 10e) act against the side walls (31) of the cassette housing (28) when the cassette (2) is in the storage case (1).

10. A combination as claimed in any of the preceding Claims, characterized in that the upper edge portions (9d, 10d) of the inner surfaces of the side walls (9, 10) of the base section (3) are bevelled.

**Patentansprüche**

1. Kombination einer Magnetbandkassette (2) mit einem Kassettenbehälter (1), wobei die Kassette ein Gehäuse (28) aufweist mit zwei parallelen, im wesentlichen rechtwinkligen Hauptwänden (29, 30), zwei Seitenwänden (31) und einer Rückwand (22) sowie mit einer Vorderseite mit einer Frontöffnung oder -ausnehmung (33), die sich bis in wenigstens eine Hauptwand (29, 30) erstreckt und mit einer Trennwand (34), welche die Frontöffnung (33) vom Gehäuseinnern (28) trennt, wobei in diesem Gehäuse zwei nebeneinander liegende Wickelkerne (35, 36) vorgesehen sind und zwar zur Drehung um zwei Achsen, die sich senkrecht zu den Hauptwänden (29, 30) erstrecken, wobei auf den genannten Wickelkernern (35, 36) ein Magnetband (37) aufgewickelt ist, von dem ein Teil (37a) sich über die Frontöffnung (33) erstreckt und der bei Nicht-Gebrauch der Kassette (2) wenigstens auf der Vorderseite durch einen Vorderdeckel (38) bedeckt ist, der in geschlossener Lage die Frontöffnung (33) auf der Vorderseite derselben abdeckt und mit dem Gehäuse (28) schwenkbar verbunden ist, wobei der Kassettenbehälter (1) die folgenden Teile aufweist:

a) einen Basisteil (3) mit einem recktwinkligen Boden (5) mit einem Vorderrand (6) und einem Hinterrand (7), einer aufrechtstehenden Rückwand (8), die an den Hinterrand (7) des Bodens grenzt sowie einem Paar in einem Abstand voneinander liegender paralleler aufrechtstehender Seitenwände (9, 10), die sich von der Rückwand (8) in Richtung des Vorderrandes (6) des Bodens (5) erstrecken,

b) wenigstens ein aufrechtstehendes Positionierungselement (25) auf dem Boden (5) des Basisteils (3) zum Positionieren der Magnetbandkassette (2), wenn die Kassette sich in dem Behälter (1) befindet, wobei der Vorderdeckel (38) der Rückwand (8) des Basisteils (3) zugewandt ist,

c) einen Deckelteil (4) mit einer rechtwinkligen oberen Wand (16) mit einem Vorderrand (17) und einem Hinterrand (18), einem Wandteil (18a), der sich längs dieses Hinterrandes (18) erstreckt und der sich im geschlossenen Zustand des Deckelteils (4) wenigstens im wesentlichen an die Rückwand (8) des Basisteils (3) anschliesst, einer Vorderwand (9), die sich an den Vorderrand (17) der oberen Wand (16) anschliesst und im geschlossenen Zustand des Deckelteils (4) an dem Boden (5) des Basisteils (3) neben dem Vorderrand (16) desselben anliegt, sowie einem Paar paralleler in einem Abstand voneinander liegender Seitenwände (20, 21), die sich von der Vorderwand (19) des Deckelteils (4) in Richtung des Hinterrandes (18) der oberen Wand (16) desselben erstrecken, wobei die Seitenwände (20, 21) des Deckelteils (4) mit den Seitenwänden (9, 10) des Basisteils (3) schwenkbar verbunden sind, damit der Deckelteil (4) gegenüber dem Basisteil (3) zwischen der geschlossenen Lage und einer geöffneten Lage schwenkbar ist, dadurch gekennzeichnet, dass das Positionierungselement (25) derart auf dem Boden (5) des Basisteils (3) gegenüber der Rückwand (8) dieses Teils (3) steht, dass, wenn die Kassette (12) sich in dem Kassettenbehälter (1) befindet, das Positionierungselement (25) sich bis in die Frontöffnung (33) des Kassettengehäuses (28) erstreckt und der Abstand (46), gemessen auf dem Boden (5) des Basisteils (3), zwischen derjenigen Seite des Positionierungselementes (25), die von der Rückwand (8) des Baisteils (3) entfernt ist, und der Innenseite dieser Wand grösser ist als der Abstand (45) zwischen demjenigen Teil der Trennwand (44) in dem Kassettengehäuse (28), der dem Positionierungselement (25) zugewandt ist und der Vorderseite des Vorderdeckels (38) der Kassette (2), so dass eine Bewegung der Kassette (2) innerhalb des Kassettenbehälters (1) in Richtung der Rückwand (8) des Basisteils (3) des Kassettenbehälters (1) durch einen Anschlag der Trennwand (34) gegen das Positionierungselement (25) beschränkt wird, wobei gewährleistet ist, dass der Vorderdeckel (38) der Kassette (2) frei von der Rückwand (8) des Basisteils (3) des Kassettenbehälters (1) bleibt.

2. Kombination nach Anspruch 1, dadurch gekennzeichnet, dass auf dem Boden (5) des Basisteils (3) des Kassettenbehälters (1) in der Nähe des Vorderrandes (6) desselben ein Rand (13) vorgesehen ist, der sich parallel zu dem genannten Vorderrand (6) erstreckt und der Abstand (46), gemessen auf dem Boden (5) des Basisteils (3), zwischen derjenigen Seite (13b) des Randes (13), die der Rückwand (8) des Basisteils (3) zugewandt ist und demjenigen Teil (27) des Postionierungselementes (25), der dieser Wand (8) am nächsten liegt, kleiner ist als der Abstand (47) zwischen derjenigen Seite (40) des Vorderdeckels (38) der Kassette (2), die, wenn die Kassette (2) sich in dem Kassettenbehälter (1) befindet, von der Rückwand (8) des Basisteils (3) und von der Aussenseite der Rückwand (32) des Kassettengehäuses (28) entfernt ist, so dass eine Bewegung der Kassette (2) innerhalb des Kassettenbehälters (1) in Richtung der Vorderwand (19) des Deckelteils (4) des Kassettenbehälters (1) durch einen Anschlag der Rückwand (32) des Kassettengehäuses (28) gegen den Rand (13) beschränkt wird, so dass der Vorderdeckel (38) der Kassette (2) frei von dem Postionierungselement (25) bleibt.

3. Kombination nach Anspruch 1 oder 2, dadurch gekennzeichnet, dass das Positionierungselement eine Zunge (26) aufweist, die sich parallel zu der Rückwand (8) des Basisteils (3) des Kassettenbehälters (1) erstreckt.

4. Kombination nach Anspruch 3, dadurch gekennzeichnet, dass das Positionierungselement (25) weiterhin wenigstens eine Rippe (27) mit einem oberen Rand (27a) aufweist, der sich in Abwärtsrichtung von dem oberen Rand der Zunge (26) in Richtung der Rückwand (8) des Basisteils (3) des Kassettenbehälters (1) erstreckt.

5. Kombination nach Anspruch 4, dadurch gekennzeichnet, dass es auf dem Boden (5) des Basisteils (3) des Kassettenbehälters (1) zwei Positionierungselemente (25) gibt, wobei die Zungen (26) der Elemente (25) in einem Abstand voneinander und fluchtend zueinander liegen und wobei die Rippe (27) jedes Elementes (25) sich an die betreffende Zunge (26) rechtwinklig anschliesst und zwar im wesentlichen halbwegs zwischen den Enden der Zunge (26), gemessen parallel zu der Rückwand (8) des genannten Basisteils (3).

6. Kombination nach Anspruch 4 oder 5, wobei der Vorderdeckel (38) der Kassette (2) einzelne Aussen- (39) und Innendeckel (40) aufweist, die miteinander verbunden sind und auf der Vorderseite bzw. Rückseite desjenigen Teils (37a) des Magnetbandes (37) liegen, der sich über die Frontöffnung (33) des Kassettengehäuses (38) erstreckt, dadurch gekennzeichnet, dass der obere Rand (27a) der Rippe (27) des bzw. jedes Positionierungselementes (25) sich im wesentlichen parallel zu dem benachbarten Teil des inneren Vorderdeckels (40) der Kassette (2) erstreckt, wenn die Kassette sich in dem Kassettenbehälter (1) befindet.

7. Kombination nach Anspruch 2 oder einem der Ansprüche 3 bis 6, insofern abhängig von Anspruch 2, dadurch gekennzeichnet, dass diejenige Seite (13a) des Randes (13) auf dem Boden (15) des Basisteils (3) des Kassettenbehälters (1), die näher bei dem Vorderrand (6) des genannten Bodens (5) liegt, in der Rückwärtsrichtung sich schräg aufwärts erstreckt und dass diejenige Seite (13b) des Randes (13), die der Rückwand (8) des genannten Bodenteils (3) zugewandt ist, senkrecht auf dem Boden (5) des Basisteils (3) steht.

8. Kombination nach Anspruch 7, dadurch gekennzeichnet, dass auf dem Boden (5) des Basisteils (3) des Kassettenbehälters (1) an jedem Ende des Randes (13) ein zugespitzter Vorsprung (12) gebildet ist, wobei diese Vorsprünge (12) gegenüber der Seitenwand (11) des Basisteils (3) fluchtend liegen und über den Rand (13) hinausragen.

9. Kombination nach einem der vorstehenden Ansprüche, dadurch gekennzeichnet, dass in jeder der Seitenwände (9, 10) des Basisteils (3) des Kassettenbehälters (1) eine Federnase (9e, 10e) vorgesehen ist, wobei diese Nasen (9e, 10e) gegen die Seitenwände (31) des Kassettengehäuses (28) drüken, wenn die Kassette (2) sich in dem Kassettenbehälter (1) befindet.

10. Kombination nach einem der vorstehenden Ansprüche, dadurch gekennzeichnet, dass die oberen Randteile (9d, 10d) der Innenflächen der Seitenwände (9, 10) des Basisteils (3) nach aussen aufwärts abgeschrägt sind.

## Revendications

1. Combinaison d'une cassette de bande magnétique (2) et d'une boîte de rangement (1) pour la cassette, la cassette comprenant un boîtier (28) comportant deux parois principales parallèles en substance rectangulaires (29, 30), deux parois latérales (31) et une paroi postérieure (32), un côté antérieur avec une ouverture ou un renfoncement antérieur (33) qui s'étend dans au moins une paroi principale (29, 30) et une cloison (34) qui sépare l'ouverture ou le renfoncement antérieur (33) de l'intérieur du boîtier (28), ce boîtier (28) contenant deux moyeux de bobines (35, 36) juxtaposés qui sont montés à rotation autour de deux axes perpendiculaires aux parois principales (29, 30), une bande magnétique (37) étant bobinée sur les moyeux de bobines (35, 36) et comportant une partie (37a) qui s'étend en travers de l'ouverture ou du renfoncement antérieur (33) et qui, lorsque la cassette (2) n'est pas en service, est couverte au moins du côté antérieur par un volet antérieur (38) qui, dans une position de fermeture, couvre l'ouverture ou le renfoncement antérieur (33) à son côté antérieur et qui est articulé au boîtier (28), et la boîte de rangement (1) comprenant:

a) une section de base (3) comportant un fond rectangulaire (5) avec un bord antérieur (6) et un bord postérieur (7), une paroi postérieure verticale (8) qui se raccorde au bord postérieur (7) du fond et deux parois latérales verticales parallèles espacées (9, 10) qui s'étendent à partir de la paroi postérieur (8) en direction du bord antérieur (6) du fond (5),

b) au moins un élément de positionnement vertical (25) sur le fond (5) de la section de base (3) pour positionner la cassette de bande magnétique (2) lorsqu'elle est située dans la boîte (1) avec son volet antérieur (38) tourné vers la paroi postérieure (8) de la section de base (3),

c) une section de couvercle (4) comprenant une paroi supérieure rectangulaire (16) avec un bord antérieur (17) et un bord postérieure (18), une partie de paroi (18a) qui s'étend le long de ce bord postérieur (18) et qui, dans une position de fermeture de la section de couvercle (4), est au moins en substance contiguë à la paroi postérieure (8) de la section de base (3), une paroi antérieure (19) qui se raccorde au bord antérieur (17) de la paroi supérieure (16) et qui, dans la position de fermeture de la section de couvercle (4), porte sur le fond (5) de la section de base (3) près de son bord antérieur (6) et deux parois latérales parallèles espacées (20, 21) qui s'étendent à partir de la paroi antérieure (19) de la section de couvercle (4) en direction du bord postérieur (18) de sa paroi supérieure (16), les parois latérales (20, 21) de la section de couvercle (4) étant articulées aux parois latérales (9, 10) de la section de base (3) afin de permettre à la section de couvercle (4) de pivoter par rapport à la section de base (3) entre la position de fermeture et une position d'ouverture, caractérisée en ce que l'élément de positionnement (25) est situé sur le fond (5) de la section de base (3) par rapport à la paroi postérieure (8) de cette section (3) d'une manière telle que lorsque la cassette (2) se trouve dans la boîte de rangement (1), l'élément de positionnement (25) s'étend dans l'ouverture ou le renfoncement antérieur (33) du boîtier de cassette (28), et la distance (44), mesurée sur le fond (5) de la section de base (3), entre le côté de l'élément de positionnement (25) qui est éloigné de la paroi postérieure (8) de la section de base (3) et le côté intérieur de cette paroi, soit supérieure à la distance (45) entre la partie de la cloison (34) dans le boîtier de cassette (28) qui est tournée vers l'élément de positionnement (25) et le côté antérieur du volet antérieur (38) de la cassette (2), de sorte qu'un déplacement de la cassette (2) à l'intérieur de la boîte (1) en direction de la paroi postérieure (8) de la section de base (3) de la boîte (1) est limité par l'entrée en contact de la cloison (34) avec l'élément de positionnement (25), ce qui assure que le volet antérieur (38) de la cassette (2) reste dégagé de la paroi postérieure (8) de la section de base (3) de la boîte (1).

2. Combinaison suivant la revendication 1, caractérisée en ce que sur le fond (5) de la section de base (3) de la boîte de rangement (1), près de son bord antérieur (6), se trouve une nervure (13) qui s'étend parallèlement au bord antérieur (6) et la distance (46), mesurée sur le fond (5) de la section de base (3), entre le côté (13b) de la nervure (13) qui est tourné vers la paroi postérieure (8) de la section de base (3) et la partie (27) de l'élément de positionnement (25) qui est la plus proche de cette paroi (8), soit inférieure à la distance (47) entre le côté (40) du volet antérieur (38) de la cassette (2) qui, lorsque la cassette (2) se trouve dans la boîte de rangement (1), est éloigné de la paroi postérieure (8) de la section de base (3) et le côté extérieur de la paroi postérieure (32) du boîtier de cassette (28), de sorte qu'un déplacement de la cassette (2) dans la boîte de rangement (1) en direction de la paroi antérieure (19) de la section de couvercle (4) de la boîte (1) est limité par l'entrée en contact de la paroi postérieure (32) du boîtier de cassette (28) avec la nervure (13), de sorte que le volet antérieur (38) de la cassette (2) reste dégagé de l'élément de positionnement (25).

3. Combinaison suivant la revendication 1 ou 2, caractérisée en ce que l'élément de positionnement comprend une oreille (26) qui s'étend parallèlement à la paroi postérieure (8) de la section de base (3) de la boîte de rangement (1).

4. Combinaison suivant la revendication 3, caractérisée en ce que l'élément de positionnement (25) comprend, en outre, au moins un gousset (27) présentant un bord supérieur (27a) qui va en s'inclinant vers le bas depuis le bord supérieur de l'ailette (26) en direction de la paroi postérieure (8) de la section de base (3) de la boîte de rangement (1).

5. Combinaison suivant la revendication 4, caractérisée en ce que deux éléments de positionnement (25) sont prévus sur le fond (5) de la section de base (3) de la boîte de rangement (1), les oreilles (26) des éléments (25) étant espacées l'une de l'autre et disposées en ligne et le gousset (27) de chaque élément (25) se raccordant à l'oreille respective (26) perpendiculairement à celle-ci en substance à mi-distance entre les extrémités de l'oreille (26) mesurée parallèlement à la paroi postérieure (8) de la section de base (3).

6. Combinaison suivant la revendication 4 ou 5, dans lequelle le volet antérieur (38) de la cassette (2) comprend des volets extérieur et intérieur séparés (39 et 40) qui sont accouplés l'un à l'autre et qui sont disposés respectivement au niveau des faces antérieure et postérieure de la partie (37a) de la bande magnétique (37) qui s'étend en travers de l'ouverture ou du renfoncement antérieur (33) du boîtier de cassette (28), caractérisée en ce que le bord supérieur (27a) du gousset (27) du ou de chaque élément de positionnement (25) s'étend en substance parallèlement à la partie adjacente du volet antérieur intérieur (40) de la cassette (2) lorsque celle-ci se trouve dans la boîte de rangement (1).

7. Combinaison suivant la revendication 2 ou l'une quelconque des revendications 3 à 6, découlant de la revendication 2, caractérisée en ce que le côté (13a) de la nervure (13) située sur le fond (5) de la section de base (3) de la boîte de rangement (1) qui est proche du bord antérieur (6) du fond (5) s'incline vers le haut et vers l'arrière et le côté (13b) de la nervure (13) qui est tourné vers la paroi postérieure (8) de la section de base (3) est perpendiculaire au fond (5) de la section de base (3).

8. Combinaison suivant la revendication 7, caractérisée en ce qu'une saillie pointue (12) est formée sur le fond (5) de la section de base (3) de la boîte de rangement (1) à chaque extrémité de la nervure (3), les saillies (12) étant disposées en ligne avec la paroi latérale (11) de la section de base (3) et s'étendant au-dessus de la nervure (13).

9. Combinaison suivant l'une quelconque des revendications précédentes, caractérisée en ce que dans chacune des parois latérales (9, 10) de la section de base (3) de la boîte de rangement (1) est prévu un doigt élastique (9e, 10e), ces doigts (9e, 10e) agissant contre les parois latérales (31) du boîtier de cassette (28) lorsque la cassette (2) se trouve dans la boîte de rangement (1).

10. Combinaison suivant l'une quelconque des revendications précédentes, caractérisée en ce que les parties (9d, 10d) des bords supérieurs des surfaces intérieures des parois latérales (9, 10) de la section de base (3) sont biseautées.

FIG.1

FIG. 2

FIG.3

FIG.4